# EUROPEAN PATENT APPLICATION

(11) **EP 4 436 161 A1**
(43) Date of publication of application: **25.09.2024**
(21) Application number: 24159034.8
(22) Date of filing: 22.02.2024
(51) Int. Cl.: H04N 7/15, G06T 13/40, H04L 12/18

(54) **LIGHTWEIGHT CALLING WITH AVATAR USER REPRESENTATION**

(30) Priority: 23.03.2023 US 202318189016
(71) Applicant: Meta Platforms Technologies, LLC, Menlo Park, CA 94025 (US)
(72) Inventor: Barnes, Ryan, Menlo Park (US); Khan, Muhammad Adnan, Menlo Park (US); Carpenter, Andrew, Menlo Park (US); Maule, Thomas, Menlo Park (US)
(74) Representative: Murgitroyd & Company

(57) **Abstract**

Aspects of the present disclosure are directed to lightweight calling among users with avatar animation. A lightweight call can be a user-to-user interaction between users. For example, each users' system can stream lightweight call data to the other user system and output the lightweight call data. In some implementations, the output includes displaying animated avatar(s) and audio data for the lightweight call. For example, the streamed lightweight call data for a first user system can include avatar animation data for an avatar that represents that first user and audio data captured via microphone(s) of the first user system. A second user system can output the avatar animation data as an animated avatar and the corresponding audio data. Implementations of the lightweight call can be displayed via a lightweight call panel that includes side-by-side animated avatars representative of the call participants.

## Description

### TECHNICAL FIELD

The present disclosure is directed to lightweight calling among users with avatar animation.

### BACKGROUND

As the global marketplace increases and challenges such as distributed teams become more prevalent, remote working and collaboration is becoming ever more common. Remote working typically involves an assortment of technologies such as remote access to shared documents, various texts-based communication services (e.g., email, instant message, text message, etc.), telephone communication, and video calling. Such remote working provides a number of benefits, such as reduced travel times, increased health and safety, and greater flexibility. However, remote workers face various challenges not experienced by their in-office counterparts. For example, conventional virtual interactions tools, such as video calling or virtual meetings, are conducive for a limited set interactions, however these tools can be overly intrusive for some users in some scenarios. Remote workers often complain of missing out on the "watercooler" conversations, and other lightweight interactions that are common in real-world settings.

### SUMMARY

According to a first aspect, there is provided a method for lightweight calling among users with avatar animation, the method comprising: receiving, at a source system, status information representative of statuses for a plurality of user systems, wherein at least one of the plurality of user systems comprises a status that corresponds to availability for a lightweight call; transmitting a lightweight call request to the one user system; creating the lightweight call in response to acceptance of the lightweight call request; streaming, during the created lightweight call, source audio data and source avatar animation data to the one user system, wherein the source avatar animation data is generated using captured visual data of a source user operating the source system; receiving, during the created lightweight call from the one user system, target audio data and target avatar animation data, wherein the target avatar animation data is generated by the one user system using captured visual data of a target user operating the one user system; and outputting the target audio data and displaying, using the target avatar animation data, an animated avatar that represents the target user, wherein the animated avatar performs facial expressions in correspondence with the output target audio data.

The method may further comprise displaying a call panel at the source system. The call panel may comprise the animated avatar that represents the target user and an animated avatar that represents the source user. The animated avatar that represents the source user may be displayed using the source avatar animation data.

The animated avatar that represents the target user and the animated avatar that represents the source user may be displayed side-by-side in the call panel.

The source system may comprise an artificial reality system. The call panel may be displayed in a three-dimensional artificial reality environment.

At least one of the animated avatar that represents the target user and the animated avatar that represents the source user may be displayed in three-dimensions.

The method may further comprise generating, at the source system, the source avatar animation data using the captured visual data of the source user. The source avatar animation data may comprise a video stream of an animated avatar that represents the source user.

The received target avatar animation data may comprise avatar pose data for the avatar that represents the target user. The avatar pose data may correspond to body poses and facial expressions of the target user generated using the captured visual data of the target user. The avatar pose data may be used to animate the avatar that represents the target user.

The received target avatar animation data may comprise a video stream of the animated avatar that represents the target user. The displayed animated avatar that represents the target user may comprise the received video stream.

The method may further comprise transitioning, in response to input from the source user, the lightweight call into a full video call or a virtual meeting that comprises the source user and the target user.

The lightweight call may be transitioned into the full video call. The full video call may comprise real-time video of the source user and the target user. The lightweight call may be transitioned into the virtual meeting. The virtual meeting may comprise one or more collaboration tools absent from the lightweight call.

Prior to creating the lightweight call, the avatar that represents the target user may be displayed at the source system and is unanimated. After creating the lightweight call, the avatar that represents the target user may be displayed at the source system and may be animated. After the lightweight call is transitioned to the full video call, real-time video of the target user may be displayed at the source system and the avatar that represents the target user A) may be no longer displayed at the source system or B) may be displayed at the source system and may be unanimated.

The one or more collaboration tools may comprise a shared virtual whiteboard, screen sharing, or any combination thereof.

According to a second aspect, there is provided a computer-readable storage medium storing instructions that, when executed by a computing system, cause the computing system to perform a process for lightweight calling among users with avatar animation, the process comprising: transmitting, from a source system, a lightweight call request to a target system; creating the lightweight call in response to acceptance of the lightweight call request; streaming, during the created lightweight call, source audio data and source avatar animation data to the target system, wherein the source avatar animation data is generated using captured visual data of a source user operating the source system; receiving, during the created lightweight call from the target system, target audio data and target avatar animation data, wherein the target avatar animation data is generated by the target system using captured visual data of a target user operating the target system; and outputting the target audio data and displaying, using the target avatar animation data, an animated avatar that represents the target user, wherein the animated avatar performs facial expressions in correspondence with the output target audio data.

The process may further comprise displaying a call panel at the source system. The call panel may comprise the animated avatar that represents the target user and an animated avatar that represents the source user. The animated avatar that represents the source user may be displayed using the source avatar animation data.

The animated avatar that represents the target user and the animated avatar that represents the source user may be displayed side-by-side in the call panel.

The source system may comprise an artificial reality system. The call panel may be displayed in a three-dimensional artificial reality environment.

At least one of the animated avatar that represents the target user and the animated avatar that represents the source user may be displayed in three-dimensions.

The process may further comprise generating, at the source system, the source avatar animation data using the captured visual data of the source user. The source avatar animation data may comprise a video stream of an animated avatar that represents the source user.

The received target avatar animation data may comprise avatar pose data for the avatar that represents the target user. The avatar pose data may correspond to body poses and facial expressions of the target user generated using the captured visual data of the target user. The avatar pose data may be used to animate the avatar that represents the target user.

According to a third aspect, there is provided a source system for lightweight calling among users with avatar animation, the source system comprising: one or more processors; and one or more memories storing instructions that, when executed by the one or more processors, cause the source system to perform a process comprising: transmitting, from the source system, a lightweight call request to a target system; creating the lightweight call in response to acceptance of the lightweight call request; streaming, during the created lightweight call, source audio data and source avatar animation data to the target system, wherein the source avatar animation data is generated using captured visual data of a source user operating the source system; receiving, during the created lightweight call from the target system, target audio data and target avatar animation data, wherein the target avatar animation data is generated by the target system using captured visual data of a target user operating the target system; and outputting the target audio data and displaying, using the target avatar animation data, an animated avatar that represents the target user, wherein the animated avatar performs facial expressions in correspondence with the output target audio data.

### BRIEF DESCRIPTION OF THE DRAWINGS

Figure 1 is a block diagram illustrating an overview of devices on which some implementations of the present technology can operate.
Figure 2A is a wire diagram illustrating a virtual reality headset which can be used in some implementations of the present technology.
Figure 2B is a wire diagram illustrating a mixed reality headset which can be used in some implementations of the present technology.
Figure 2C is a wire diagram illustrating controllers which, in some implementations, a user can hold in one or both hands to interact with an artificial reality environment.
Figure 3 is a block diagram illustrating an overview of an environment in which some implementations of the present technology can operate.
Figure 4 is a block diagram illustrating components which, in some implementations, can be used in a system employing the disclosed technology.
Figure 5 is a system diagram illustrating components for lightweight calling among users with avatar animation.
Figure 6 is a diagram of an example dashboard for launching a lightweight virtual call with user statuses.
Figure 7 is a diagram of an example lightweight call panel with avatar animation.
Figure 8A is a diagram of an example lightweight call panel with avatar animation in artificial reality.
Figure 8B is a diagram of an example full format user interaction in artificial reality.
Figure 9 is a flow diagram illustrating a process used in some implementations of the present technology for lightweight calling among users with avatar animation.
Figure 10 is a flow diagram illustrating a process used in some implementations of the present technology for transitioning a lightweight call to a full scale interaction.

The techniques introduced here may be better understood by referring to the following Detailed Description in conjunction with the accompanying drawings, in which like reference numerals indicate identical or functionally similar elements.

### DETAILED DESCRIPTION

Aspects of the present disclosure are directed to lightweight calling among users with avatar animation. A lightweight call can be a user-to-user (e.g., one-to-one) interaction between two users or in some cases between three or more users. For example, each users' system can stream lightweight call data to the other user system and output the lightweight call data. In some implementations, the output includes displaying animated avatar(s) and audio data for the lightweight call. For example, the streamed lightweight call data for a first user system can include avatar animation for an avatar that represents that first user and audio data captured via microphone(s) of the first user system. The second user system can output the avatar animation data as an animated avatar and the corresponding audio data. Similarly, the second user system can stream avatar animation data for an avatar that represents the second user and audio data captured via microphone(s) of the second user system, and the first user system can output the avatar animation data as an animated avatar and the corresponding audio data. Implementations of the lightweight call can be displayed via a lightweight call panel that includes side-by-side animated avatars representative of the call participants.

In some implementations, a lightweight call manager can configure software structure(s) for implementing the lightweight call, such as software process, data structures, communication channels, and the like. For example, a real-time communication channel can be established that connects the participating user systems. In some implementations, the lightweight call can be similar to a video call, however the video streams of the participating users can be replaced by rendered video of animated avatars. For example, a first participating user system can render an avatar of a first participating user, where the rendered avatar is animated to mimic the captured facial expressions and/or movements of the user operating the first participating user system. The second participating user system can similarly render an animated avatar that mimics the captured facial expressions and/or movements of the user operating the second participating user system. In some implementations, these animated avatars can be rendered as video, and the rendered video can be streamed over the real-time communication channel as lightweight call data. In other cases, the avatars can be defined two-dimensional (2D) or three-dimensional (3D) objects which can be animated to show particular poses, and lightweight user pose data can be streamed between their devices to cause the avatars loaded onto the recipient systems to be correspondingly animated.

In some implementations, the lightweight call data can be displayed via a lightweight call panel (e.g., two-dimensional window). For example, the lightweight call panel can include the video of one or both animated avatars (e.g., displayed side-by-side) and light weight call controls (e.g., mute, toggle on or off avatar representation, transition to full scale interaction, etc.). In some implementations, a participating user system can be an artificial reality system, and the call panel can be displayed as a two-dimensional panel in a three-dimensional artificial reality environment. In this example, one or both avatars can be displayed in three-dimensions.

In some implementations, a participating user, via the participating user's system, can request a transition of the lightweight call to a full scale interaction, such as a full video call or a virtual meeting. In response, the lightweight call manager can transition the lightweight call to a video call or virtual meeting. For example, the lightweight call manager can issue a software call to a collaboration tool. The software call can cause the collaboration tool to create the full scale interaction and add the participants of the lightweight call to the full scale interaction. For example, the software call can cause the creation of a video call, virtual meeting, or any other suitable full scale interaction.

In some implementations, the video call can comprise full video of each participating user rather than animated avatars that represent the users. Thus, the lightweight call and the animated avatar(s) can be less obtrusive than the full scale video call. In some implementations, the virtual meeting can include collaboration tools absent from a lightweight call. For example, a shared virtual whiteboard can support input from any users participating in the virtual meeting. In another example, the virtual meeting can permit screen sharing, where a participating user can share the user's screen (e.g., screen displayed via a monitor or other display device) with the other participants of the virtual meeting. Additional participants (beyond the original participants of the lightweight call) can also join the virtual meeting.

Embodiments of the disclosed technology may include or be implemented in conjunction with an artificial reality system. Artificial reality or extra reality (XR) is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, a MR headset could be shaped as a pair of glasses with a pass-through display, which allows light from the real world to pass through a waveguide that simultaneously emits light from a projector in the MR headset, allowing the MR headset to present virtual objects intermixed with the real objects the user can see. "Artificial reality," "extra reality," or "XR," as used herein, refers to any of VR, AR, MR, or any combination or hybrid thereof.

Conventional collaboration tools comprise audio only calls or video calls. However, audio only calls can lack user presence, such as the presence achieved by a visual depiction of the user. Moreover, users often experience obtrusive elements when performing a video call. For example, the user's full video is conventionally displayed to call participants during video calls. In addition, a user workflow for performing (e.g., initiating or accepting) a video call can be disruptive, as the user may be required to switch from their original work/tasks, via interactions with an original application, to a separate user workflow for launching the video call, via a new application.

Implementations provide lightweight calling among users that includes user presence via animated avatars. The animated avatars can achieve a visual user presence that is lacking in audio only calls. The animated avatars can also achieve a less obtrusive version of a call with visual user presence when compared to a full video call. A full video call includes streamed video of participating users, and sometimes the users' surroundings. The lightweight call with animated avatars can be less obtrusive while still providing a visual user presence that enhances the user experience and collaborative feel among the members of the lightweight call.

In addition, implementations permit lightweight calling via an efficient user workflow that is less obtrusive than a conventional user workflow for video calling. Implementations include initiating a lightweight call using a simplified workflow. For example, a listing of team members can be displayed to a user via a collaboration tool, such as a panel of avatars. A team member can initiate a lightweight call with the user via a minimally invasive indication, such as an animation of the avatar corresponding to the team member (e.g., animation of the avatar waiving, a change to the display size of the avatar, etc.). The user can accept the lightweight call by selecting the team member's avatar, and during the lightweight call the team member's avatar can be animated to mimic the team member's facial expressions/poses. Such a lightweight workflow causes minimal disruption to the user while still permitting interaction with the user's team member that includes a visual representation of the team member.

Yet further, lightweight calling can provide an immersive calling experience where the participants feel more connected than with an audio call due to the animated avatars that mimic the movements of the participants, while requiring less bandwidth and processing resources than video calls due to the ability of these systems to transmit only audio data and pose data between them, where pose data can be simple kinematic model parameters which are much smaller than video data and animating an avatar can be much less computational expensive than rendering video.

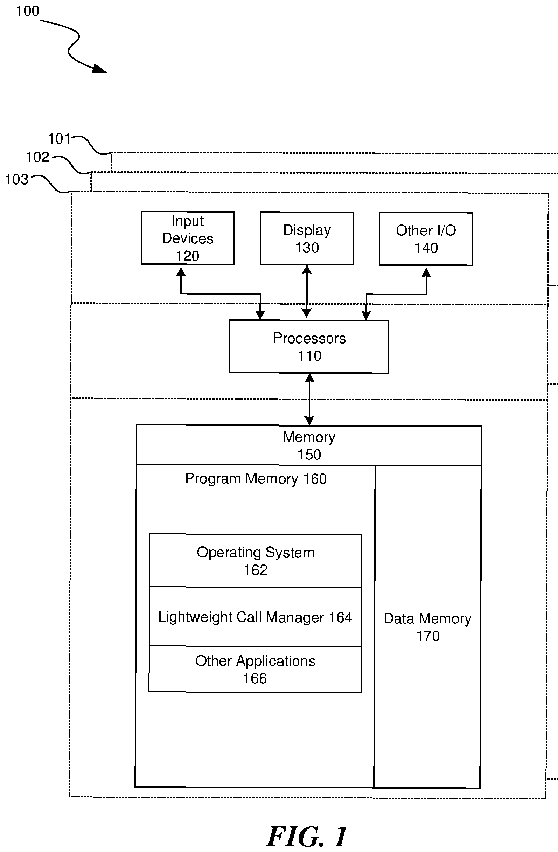

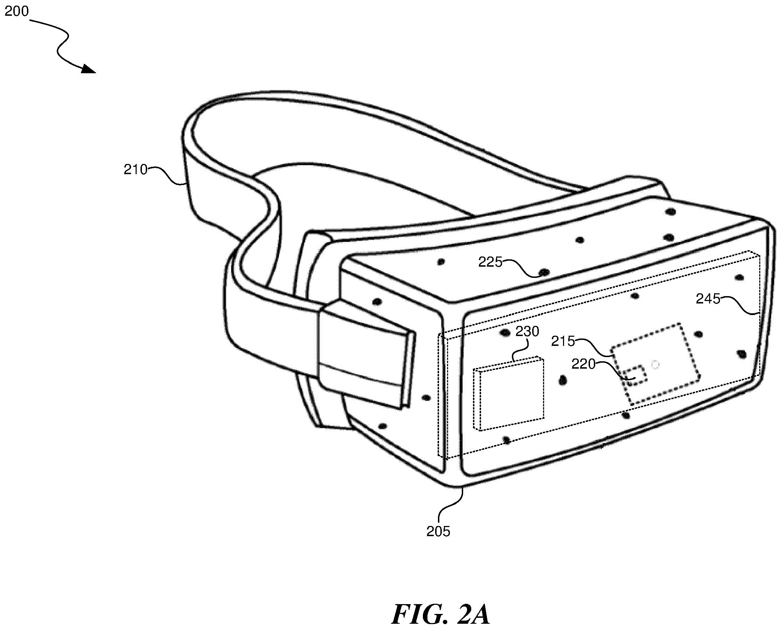

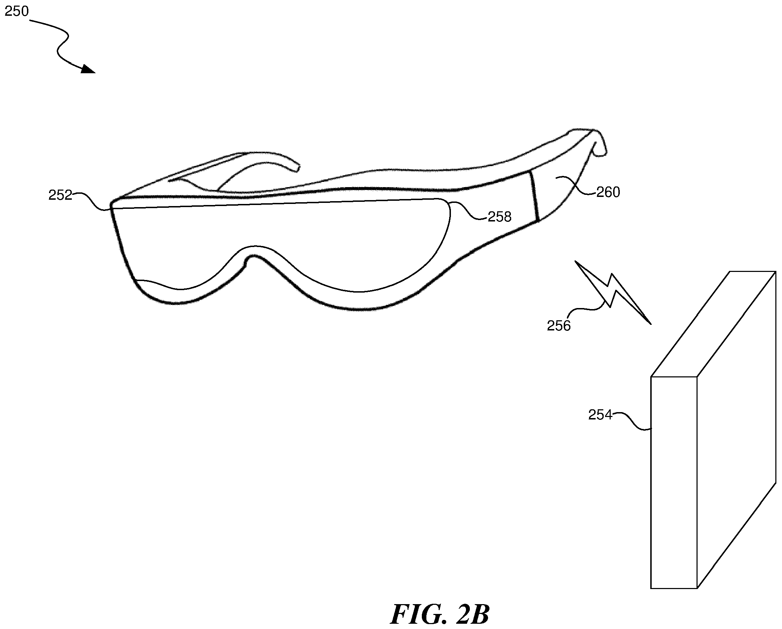

Several implementations are discussed below in more detail in reference to the figures. Figure 1 is a block diagram illustrating an overview of devices on which some implementations of the disclosed technology can operate. The devices can comprise hardware components of a computing system 100 that implement lightweight calling among users with avatar animation. In various implementations, computing system 100 can include a single computing device 103 or multiple computing devices (e.g., computing device 101, computing device 102, and computing device 103) that communicate over wired or wireless channels to distribute processing and share input data. In some implementations, computing system 100 can include a stand-alone headset capable of providing a computer created or augmented experience for a user without the need for external processing or sensors. In other implementations, computing system 100 can include multiple computing devices such as a headset and a core processing component (such as a console, mobile device, or server system) where some processing operations are performed on the headset and others are offloaded to the core processing component. Example headsets are described below in relation to Figures 2A and 2B. In some implementations, position and environment data can be gathered only by sensors incorporated in the headset device, while in other implementations one or more of the non-headset computing devices can include sensor components that can track environment or position data.

Computing system 100 can include one or more processor(s) 110 (e.g., central processing units (CPUs), graphical processing units (GPUs), holographic processing units (HPUs), etc.) Processors 110 can be a single processing unit or multiple processing units in a device or distributed across multiple devices (e.g., distributed across two or more of computing devices 101-103).

Computing system 100 can include one or more input devices 120 that provide input to the processors 110, notifying them of actions. The actions can be mediated by a hardware controller that interprets the signals received from the input device and communicates the information to the processors 110 using a communication protocol. Each input device 120 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 110 can be coupled to other hardware devices, for example, with the use of an internal or external bus, such as a PCI bus, SCSI bus, or wireless connection. The processors 110 can communicate with a hardware controller for devices, such as for a display 130. Display 130 can be used to display text and graphics. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network chip or card, video chip or card, audio chip or card, USB, firewire or other external device, camera, printer, speakers, CD-ROM drive, DVD drive, disk drive, etc.

In some implementations, input from the I/O devices 140, such as cameras, depth sensors, IMU sensor, GPS units, LiDAR or other time-of-flights sensors, etc. can be used by the computing system 100 to identify and map the physical environment of the user while tracking the user's location within that environment. This simultaneous localization and mapping (SLAM) system can generate maps (e.g., topologies, girds, etc.) for an area (which may be a room, building, outdoor space, etc.) and/or obtain maps previously generated by computing system 100 or another computing system that had mapped the area. The SLAM system can track the user within the area based on factors such as GPS data, matching identified objects and structures to mapped objects and structures, monitoring acceleration and other position changes, etc.

Computing system 100 can include a communication device capable of communicating wirelessly or wire-based with other local computing devices or a network node. The communication device can communicate with another device or a server through a network using, for example, TCP/IP protocols. Computing system 100 can utilize the communication device to distribute operations across multiple network devices.

The processors 110 can have access to a memory 150, which can be contained on one of the computing devices of computing system 100 or can be distributed across of the multiple computing devices of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, lightweight call manager 164, and other application programs 166. Memory 150 can also include data memory 170 that can include, e.g., user avatar information (e.g., structure, poses, etc.), lightweight call data, user statuses, configuration data, settings, user options or preferences, etc., which can be provided to the program memory 160 or any element of the computing system 100.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

Figure 2A is a wire diagram of a virtual reality head-mounted display (HMD) 200. The HMD 200 includes a front rigid body 205 and a band 210. The front rigid body 205 includes one or more electronic display elements of an electronic display 245, an inertial motion unit (IMU) 215, one or more position sensors 220, locators 225, and one or more compute units 230. The position sensors 220, the IMU 215, and compute units 230 may be internal to the HMD 200 and may not be visible to the user. In various implementations, the IMU 215, position sensors 220, and locators 225 can track movement and location of the HMD 200 in the real world and in an artificial reality environment in three degrees of freedom (3DoF) or six degrees of freedom (6DoF). For example, the locators 225 can emit infrared light beams which create light points on real objects around the HMD 200. As another example, the IMU 215 can include e.g., one or more accelerometers, gyroscopes, magnetometers, other non-camera-based position, force, or orientation sensors, or combinations thereof. One or more cameras (not shown) integrated with the HMD 200 can detect the light points. Compute units 230 in the HMD 200 can use the detected light points to extrapolate position and movement of the HMD 200 as well as to identify the shape and position of the real objects surrounding the HMD 200.

The electronic display 245 can be integrated with the front rigid body 205 and can provide image light to a user as dictated by the compute units 230. In various examples, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

Figure 2B is a wire diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by link 256. In other implementations, the mixed reality system 250 includes a headset only, without an external compute device or includes other wired or wireless connections between the mixed reality HMD 252 and the core processing component 254. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the user's eye. The output light can mix with light that passes through the display 258, allowing the output light to present virtual objects that appear as if they exist in the real world.

Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects.

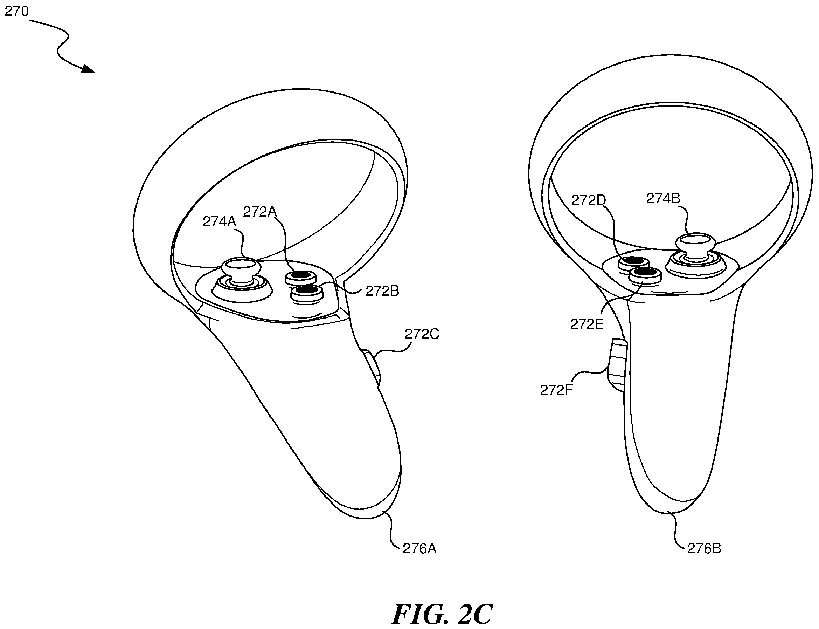

Figure 2C illustrates controllers 270 (including controller 276A and 276B), which, in some implementations, a user can hold in one or both hands to interact with an artificial reality environment presented by the HMD 200 and/or HMD 250. The controllers 270 can be in communication with the HMDs, either directly or via an external device (e.g., core processing component 254). The controllers can have their own IMU units, position sensors, and/or can emit further light points. The HMD 200 or 250, external sensors, or sensors in the controllers can track these controller light points to determine the controller positions and/or orientations (e.g., to track the controllers in 3DoF or 6DoF). The compute units 230 in the HMD 200 or the core processing component 254 can use this tracking, in combination with IMU and position output, to monitor hand positions and motions of the user. The controllers can also include various buttons (e.g., buttons 272A-F) and/or joysticks (e.g., joysticks 274A-B), which a user can actuate to provide input and interact with objects.

In various implementations, the HMD 200 or 250 can also include additional subsystems, such as an eye tracking unit, an audio system, various network components, etc., to monitor indications of user interactions and intentions. For example, in some implementations, instead of or in addition to controllers, one or more cameras included in the HMD 200 or250, or from external cameras, can monitor the positions and poses of the user's hands to determine gestures and other hand and body motions. As another example, one or more light sources can illuminate either or both of the user's eyes and the HMD 200 or 250 can use eye-facing cameras to capture a reflection of this light to determine eye position (e.g., based on set of reflections around the user's cornea), modeling the user's eye and determining a gaze direction.

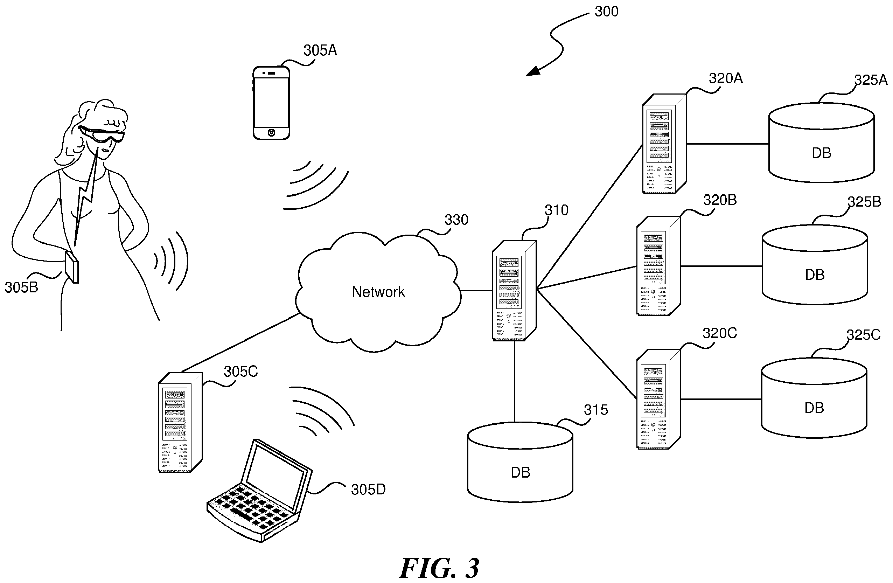

Figure 3 is a block diagram illustrating an overview of an environment 300 in which some implementations of the disclosed technology can operate. Environment 300 can include one or more client computing devices 305A-D, examples of which can include computing system 100. In some implementations, some of the client computing devices (e.g., client computing device 305B) can be the HMD 200 or the HMD system 250. Client computing devices 305 can operate in a networked environment using logical connections through network 330 to one or more remote computers, such as a server computing device.

In some implementations, server 310 can be an edge server which receives client requests and coordinates fulfillment of those requests through other servers, such as servers 320A-C. Server computing devices 310 and 320 can comprise computing systems, such as computing system 100. Though each server computing device 310 and 320 is displayed logically as a single server, server computing devices can each be a distributed computing environment encompassing multiple computing devices located at the same or at geographically disparate physical locations.

Client computing devices 305 and server computing devices 310 and 320 can each act as a server or client to other server/client device(s). Server 310 can connect to a database 315. Servers 320A-C can each connect to a corresponding database 325A-C. As discussed above, each server 310 or 320 can correspond to a group of servers, and each of these servers can share a database or can have their own database. Though databases 315 and 325 are displayed logically as single units, databases 315 and 325 can each be a distributed computing environment encompassing multiple computing devices, can be located within their corresponding server, or can be located at the same or at geographically disparate physical locations.

Network 330 can be a local area network (LAN), a wide area network (WAN), a mesh network, a hybrid network, or other wired or wireless networks. Network 330 may be the Internet or some other public or private network. Client computing devices 305 can be connected to network 330 through a network interface, such as by wired or wireless communication. While the connections between server 310 and servers 320 are shown as separate connections, these connections can be any kind of local, wide area, wired, or wireless network, including network 330 or a separate public or private network.

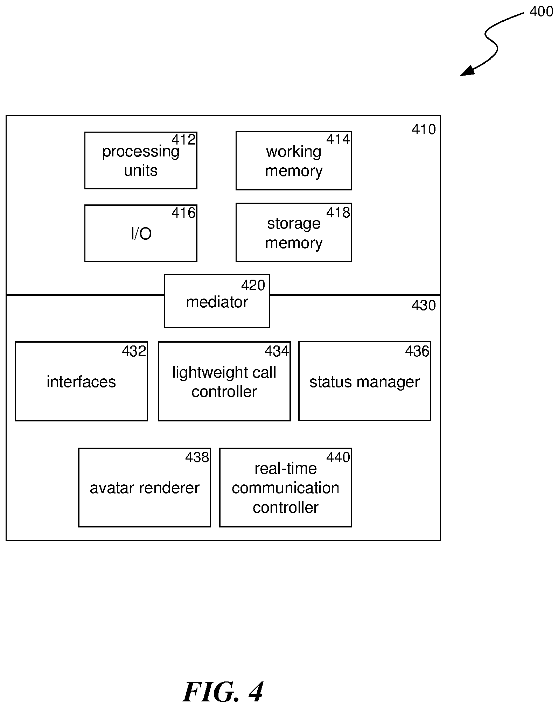

Figure 4 is a block diagram illustrating components 400 which, in some implementations, can be used in a system employing the disclosed technology. Components 400 can be included in one device of computing system 100 or can be distributed across multiple of the devices of computing system 100. The components 400 include hardware 410, mediator 420, and specialized components 430. As discussed above, a system implementing the disclosed technology can use various hardware including processing units 412, working memory 414, input and output devices 416 (e.g., cameras, displays, IMU units, network connections, etc.), and storage memory 418. In various implementations, storage memory 418 can be one or more of: local devices, interfaces to remote storage devices, or combinations thereof. For example, storage memory 418 can be one or more hard drives or flash drives accessible through a system bus or can be a cloud storage provider (such as in storage 315 or 325) or other network storage accessible via one or more communications networks. In various implementations, components 400 can be implemented in a client computing device such as client computing devices 305 or on a server computing device, such as server computing device 310 or 320.

Mediator 420 can include components which mediate resources between hardware 410 and specialized components 430. For example, mediator 420 can include an operating system, services, drivers, a basic input output system (BIOS), controller circuits, or other hardware or software systems.

Specialized components 430 can include software or hardware configured to perform operations for lightweight calling among users with avatar animation. Specialized components 430 can include lightweight call controller 434, status manager 436, avatar render 438, real-time communication controller 440, and components and APIs which can be used for providing user interfaces, transferring data, and controlling the specialized components, such as interfaces 432. In some implementations, components 400 can be in a computing system that is distributed across multiple computing devices or can be an interface to a server-based application executing one or more of specialized components 430. Although depicted as separate components, specialized components 430 may be logical or other nonphysical differentiations of functions and/or may be submodules or code-blocks of one or more applications.

Lightweight call controller 434 can initiate, manage, and coordinate lightweight call functions, such as initializing lightweight call software structures (e.g., data structures, software processes, etc.), configuring output components of the lightweight call, configuring lightweight call data for streaming, and any other suitable functionality. Example output components include a displayed two-dimensional call panel, displayed call controls (e.g., buttons at the panel), displayed avatar(s), output audio, and any other suitable output components. In some implementations, avatar render 438 (at a source system) can provide lightweight call controller 434 with avatar data for display, such as avatar data that represents a source user. In some implementations, real-time communication controller 440 (at a source system) can receive lightweight call data streamed from a target system and provide lightweight call controller 434 with the received avatar data for display, such as avatar data that represents a target user.

In some implementations, lightweight call controller 434 can be a portion of a collaboration tool, such as a collaboration application. For example, the collaboration tool can support various levels of user interaction, such as user messaging, lightweight calls, video calls, virtual meetings, and the like. In some implementations, status manager 436 can maintain the statuses for known users (e.g., users that can participate in an interaction via the collaboration tool). In some implementations, lightweight call controller 434 can initiate a call between a source user and a target user when the target user has a status that permits the lightweight call.

In some implementations, in response to input from a user (e.g., via one or more call control components), lightweight call controller 434 can transition a lightweight call to a full scale interaction. Example full scale interactions include a full video call, a virtual meeting that comprises collaboration functionality absent from a lightweight call (e.g., screen sharing, virtual whiteboard, etc.), and other suitable interactions that comprise functionality absent from a lightweight call. Components of lightweight call controller 434 can be implemented at a source computing system (e.g., the source of a lightweight call), target computing system (e.g., the target of a lightweight call), cloud computing system(s) that implement the lightweight call, any combination thereof, or any other suitable system.

Status manager 436 can receive status information for users. For example, a source system and a source user can comprise a set of known users with which the source user/source system can initiate interactions (e.g., messages, lightweight calls, video calls, virtual meetings, etc.). The known users can be friends, coworkers, members of a group, or any other suitable set of known users. In some implementations, the systems for each known user can provide the known user's status information, which indicates the known user's availability for an interaction. Example statuses include focused, in a call, in a meeting, messaging (e.g., typing a message), do not disturb, away, available, and the like.

Status manager 436 can maintain the statuses for known users and provide lightweight call controller this status information. For example, lightweight call controller 434 can initiate a call between a source user and a target user when the target user has a status that permits the lightweight call. Example statuses that permit a lightweight call include available, focused, messaging, and the like. Example statuses that do not permit a lightweight call can include in a call, in a meeting, do not disturb, away, and the like. Components of status manager 436 can be implemented at a source computing system (e.g., the source of a lightweight call), target computing system (e.g., the target of a lightweight call), cloud computing system(s) that implement the lightweight call, any combination thereof, or any other suitable system.

Avatar render 438 can render an animated avatar using captured video frames of a user. For example, a user system can capture a user via one or more cameras, and the captured visual data of the user can be processed to determine user facial expression(s) and/or user body pose information. Avatar render 438 can render an avatar such that the avatar is animated in accordance with the user's facial expression(s) and/or user body pose(s). In some implementations, a stored avatar can correspond to the user of a system. The stored avatar can include a structure (e.g., mesh structure, etc.) and appearance data (e.g., textures, colors, etc.). In an example, avatar render 438 can render an animation of the stored avatar such that the rendered avatar's facial expressions mimic the facial expressions of the captured user. The rendered animation of the stored avatar can comprise rendered video of the animated avatar.

In some implementations, avatar render 438 can render avatar face information and/or body pose information using the determined user facial expressions/body pose(s). For example, determined user facial expression(s) can be mapped to avatar face information. Similarly, determined user body pose(s) can be mapped to avatar body pose information. This avatar face information and/or body pose information can be streamed to a participant system in a lightweight call (e.g., via real-time communication controller 440) such that the participant system can displays animations of the user's avatar.

In some implementations, avatar render 438 can render avatar(s) at any suitable fidelity. For example, avatars can have different display and/or movement fidelities based on their structure (e.g., granularity of mesh structure), movement points (e.g., number of points on the avatar's face and body capable of movement), and other suitable display fidelity factors. Based on the movement points and structure, rendered avatars can simulate user movements and/or facial expressions with different fidelity levels. Example types of simulated user body movements include facial expressiveness (e.g., eye movement, such as pupil movement, winking, blinking, eyebrow movement, neutral expressions, mouth movements/lip sync, non-verbal facial mouth movements, forehead expressions, cheek expressions, etc.), body and hand movements (e.g., movements of the torso and upper-body, body orientation relative to anchor point, hand tracking, shoulder movements, torso twisting, etc.), user action movements (e.g., simulated talking using facial expressions), and other suitable user body movements. Avatar render 438 can render avatars that mimic captured user movements and/or facial expressions for a lightweight call at any suitable fidelity.

In some implementations, avatar render 438 can render an avatar using captured audio data from a user (without captured video of the user). For example, machine learning model(s) can process the audio to transcribe the user's speech to text. Avatar render 438 can then render the user's avatar such that the avatar's facial expressions (e.g., mouth movements) mouth the text from the transcribed audio. In some implementations, words and/or phrases can be mapped to sounds via mapping(s) (e.g., predefined mappings, mapping model(s), etc.), and avatar renderer 438 can render avatar animations that correspond to the mapped sounds. Components of avatar render 438 can be implemented at a source computing system (e.g., the source of a lightweight call), target computing system (e.g., the target of a lightweight call), cloud computing system(s) that implement the lightweight call, any combination thereof, or any other suitable system.

Real-time communication controller 440 can initiate a real-time communication channel and/or communicate (e.g., receive and transmit) lightweight call data over the communication channel. For example, a source system can request a lightweight call with a target system. When the lightweight call is accepted, real-time communication controller 440 can create a real-time communication channel that connects the source system and the target system. In some implementations, a real-time communication controller 440 at the source system can: stream source lightweight call data (e.g., rendered video data of an animated avatar, avatar information for animating a user avatar, and/or audio data) to the target system; and receive target lightweight call data from the target system. The real-time communication channel can be any suitable communication channel suitable for a video call (e.g., WebRTC, etc.). Components of real-time communication controller 440 can be implemented at a source computing system (e.g., the source of a lightweight call), target computing system (e.g., the target of a lightweight call), cloud computing system(s) that implement the lightweight call, any combination thereof, or any other suitable system.

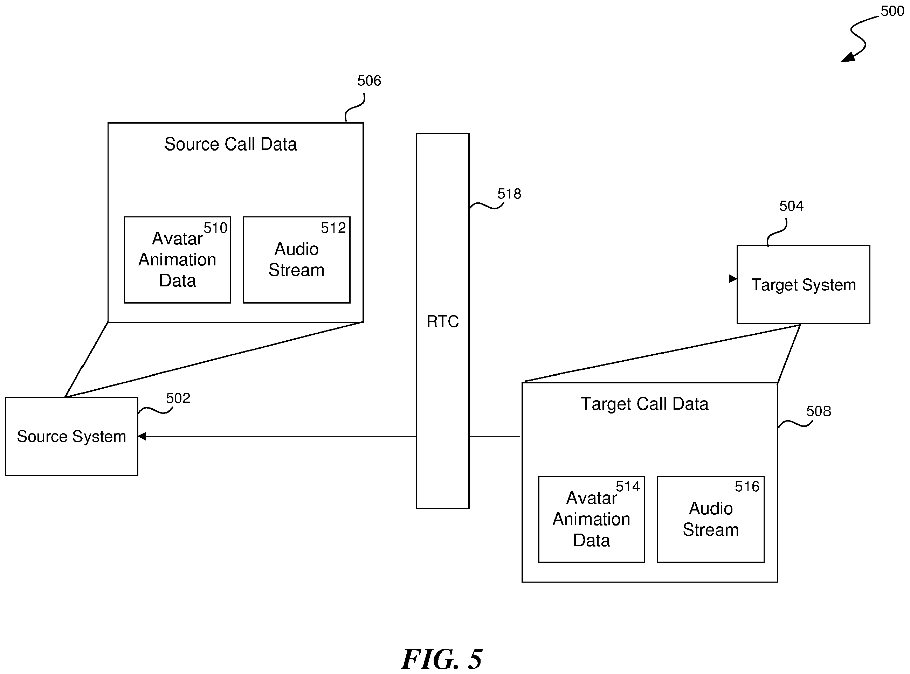

Figure 5 is a system diagram illustrating components for lightweight calling among users with avatar animation. System 500 includes source system 502, target system 504, source call data 506, target call data 508, source avatar animation data 510, source audio stream 512, target avatar animation data 514, target audio stream 516, and real-time communication (RTC) channel 518. Implementations of source system 502 and target system 504 can be any suitable system or device for lightweight calling (e.g., displaying avatar animation and outputting audio data), such as a laptop, desktop, smartphone, tablet, smart home device with display, XR system, or any other suitable computing device with a display and audio output components.

Source system 502 can request a lightweight call with target system 504. Source system 502 and target system 504 can be operated by a source user and a target user, respectively. In response to the target user accepting the lightweight call request (via input at target system 504), RTC channel 518 can be created to connect source system 502 and target system 504. Source call data 506 can be streamed from source system 502 to target system 504 via RTC channel 518 and target call data 508 can be streamed from target system 504 to source system 502 via the RTC channel.

In some implementations, source call data 506 can include source avatar animation data 510 and source audio stream 512. For example, source avatar animation data 510 can be data for animating the source user's avatar (e.g., rendered video of the source user's avatar, avatar pose data, etc.) and source audio stream 512 can be captured audio from the source user. Source system 502 can include one or more cameras that capture images/video of the source user. In some implementations, source avatar animation data 510 comprises rendered video of the source user's avatar (e.g., predefined avatar that represents the source user) animated in a manner that corresponds to captured facial expressions of the source user. The source user's avatar can be animated to mimic any other suitable pose of the source user (e.g., body movements, hand/arm movements, head/neck movements, etc.).

In some implementations, source avatar animation data 510 comprises avatar pose data for the source user's avatar. For example, target system 504 can animate the source user's avatar using the avatar pose data. Source system 502 generates the avatar pose data so that it corresponds with the source user's captured facial expressions and/or body poses. Accordingly, when target system 504 animates the user's avatar according to the avatar pose data, the source user's displayed avatar at target system 504 mimics the source user's facial expressions and body poses. Similarly, target call data 508 can comprise target avatar animation data 514 (e.g., video of an animated avatar that represents the target user, avatar pose data, etc.) and target audio stream 516 (e.g., captured audio from the target user).

In some implementations, RTC channel 518 can be any suitable real-time communication channel e.g., that implements a conventional video call or can provide real-time audio and avatar pose data transmission. In one example, source call data 506 and target call data 508 comprise call data similar to a conventional video call, however source avatar animation data 510 is video of the source user's animated avatar and target avatar animation data 514 is video of the target user's animated avatar. In another example, source avatar animation data 510 is avatar pose data for animating the source user's avatar and target avatar animation data 514 is avatar pose data for animating the target user's avatar. In conventional video calls, the transmitted video stream is often a video stream of the user (e.g., the user participating in the video call). Implementations replace the user's video stream with an animated avatar, thus achieving a lightweight call when compared to a conventional video call with a full video of a user.

Source system 502 can receive target call data 508, display the target user's animated avatar using target avatar animation data 514, and output target audio stream 516 (the target user's audio). For example, source system 502 can store target avatar data for rendering the target user's avatar (e.g., structure data, movement points, textures, colors, etc.). In some implementations, the stored target avatar data can be provided by target system 504, loaded at source system 502 in response to the lightweight call with target system 504, and/or previously retrieved by source system 502 from a repository of avatars that correspond to users of a collaboration tool. In some implementations, target avatar animation data 514 can be avatar pose data that, in combination with the stored target avatar data, can be used to display the animated target user avatar.

In some implementations, source system 502 displays the target user's animated avatar in a lightweight call panel (e.g., two-dimensional window) that includes a display of the source user's animated avatar. Similarly, target system 504 can receive source call data 506, display video stream 510 (the source user's animated avatar), and output source audio stream 512 (the source user's audio). Communication via RTC channel 518 can accomplish real-time data transfer such that the capture of video or pose data and audio data via source system 502 and the display of the source user's animated avatar and audio data at target system 504 occurs in real-time.

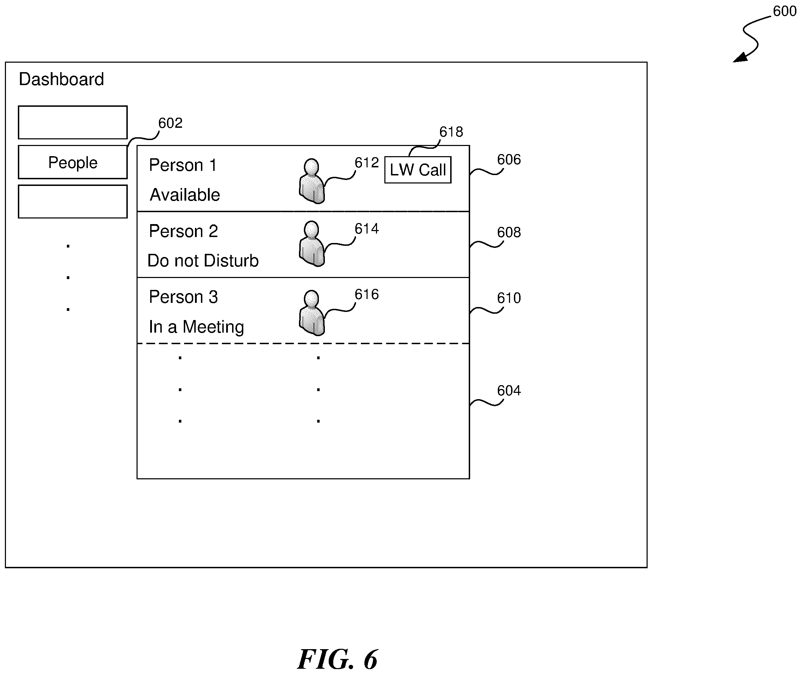

Figure 6 is a diagram of an example dashboard for launching a lightweight virtual call with user statuses. Diagram 600 includes people component 602, people panel 604, person 1 row 606, person 2 row 608, person 3 row 610, avatars 612, 614, and 616, and lightweight call button 618. In some implementations, diagram 600 can be a dashboard for a collaboration tool. For example, the dashboard can permit a source user (e.g., user operating a computing system on which the dashboard is displayed) to launch several interactions, such as virtual calls, messages, virtual meetings, lightweight calls, and other suitable interactions. Diagram 600 depicts a simplified version of the collaboration tool dashboard that illustrates dashboard components for triggering a lightweight call. Any other suitable collaboration tool dashboard and components can be implemented.

Diagram 600 includes people component 602, which can trigger display of people panel 604. People panel 604 can display known people, for example users with defined relationships with the source user, such as work team members, people identified as "friends" on social media, participants in an existing message thread, etc. People panel 604 includes person 1 row 606, person 2 row 608, and person 3 row 610. The known people can be displayed in any other suitable manner. Each of person 1 row 606, person 2 row 608, and person 3 row 610 display avatars 612, 614, and 616, respectively, which represent avatars for each of person 1, person 2, and person 3. Person 1 row 606, person 2 row 608, and person 3 row 610 also display statuses for each known person. In the illustrated example, person 1 is "available" while person 2 has a "do not disturb" status and person 3 is "in a meeting".

In some implementations, a subset of user statuses permit a lightweight call request. For example, the "do not disturb" and "in a meeting" status may not permit a lightweight call request while the "available" status does permit a lightweight call request. Because "available" permits the lightweight call request, lightweight call button 618 is displayed at person 1 row 606. For example, input at lightweight call button 618 (e.g., a button press) from the source user can trigger a request for a lightweight call to person 1.

In some implementations, when the lightweight call with person 1 begins (via selection of lightweight call button 618 and acceptance of the lightweight call request),avatar 612 can be animated using the lightweight call data. For example, avatar 612 can be animated to mimic the facial expressions/body poses of person 1. In some implementations, the display of avatar 612 and/or person 1 row 606 can be expanded during the lightweight call.

In some implementations, the source user interacting with the dashboard can receive a lightweight call request from a known person. For example, person 2 can initiate a lightweight call request to the source user. The lightweight call request can trigger animation of avatar 614, such as a hand wave or any other suitable animation. In some implementations, a request indication comprising an accept button can be displayed to the source user, and the user can accept the lightweight call request via interaction with the indication. When the lightweight call with person 2 begins, avatar 614 can be animated using the lightweight call data. For example, avatar 614 can be animated to mimic the facial expressions/body poses of person 2. In some implementations, the display of avatar 614 and/or person 2 row 608 can be expanded during the lightweight call.

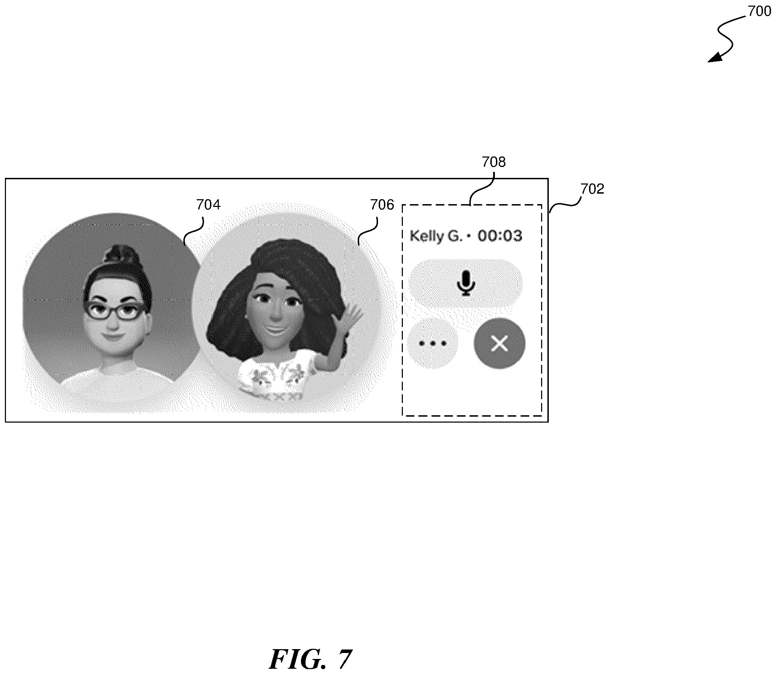

After a lightweight call request is accepted and the lightweight call is created, each participating user system can display lightweight call data, for example animated avatars. Figure 7 is a diagram of an example lightweight call panel with avatar animation. Diagram 700 includes panel 702, avatars 704 and 706, and call controls 708. Panel 702 can be a lightweight call panel displayed via a user system (e.g., laptop, smartphone, smart home device with a display, artificial reality system, etc.) during a lightweight call. For example, avatars 704 and 706 can correspond to users participating in the lightweight call. Animation for avatar 704 can correspond to captured movements and/or facial expressions of a first user on the lightweight call and animation for avatar 706 can correspond to captured movements and/or facial expressions of a second user on the lightweight call.

In some implementations, call controls 708 can permit users certain functionality during the lightweight call. For example, a user can mute the user's audio data, turn on and off display of the avatar corresponding to the user, transition the lightweight call into a full scale interaction, and perform any other suitable functionality. In some implementations, via input from the user at call controls 708, the lightweight call can be transitioned to a full video call that comprises full video of each participating user or a virtual meeting. For example, the full video call can display full video of each user rather than animated avatars that represent the users.

In some implementations, the virtual meeting can include collaboration tools absent from a lightweight call. For example, a shared virtual whiteboard can support input from any users participating in the virtual meeting. In another example, the virtual meeting can permit screen sharing, where a participating user can share the user's screen (e.g., screen displayed via a monitor or other display device) with the other participants of the virtual meeting. Additional participants (beyond the original two participants of the lightweight call) can also join the virtual meeting.

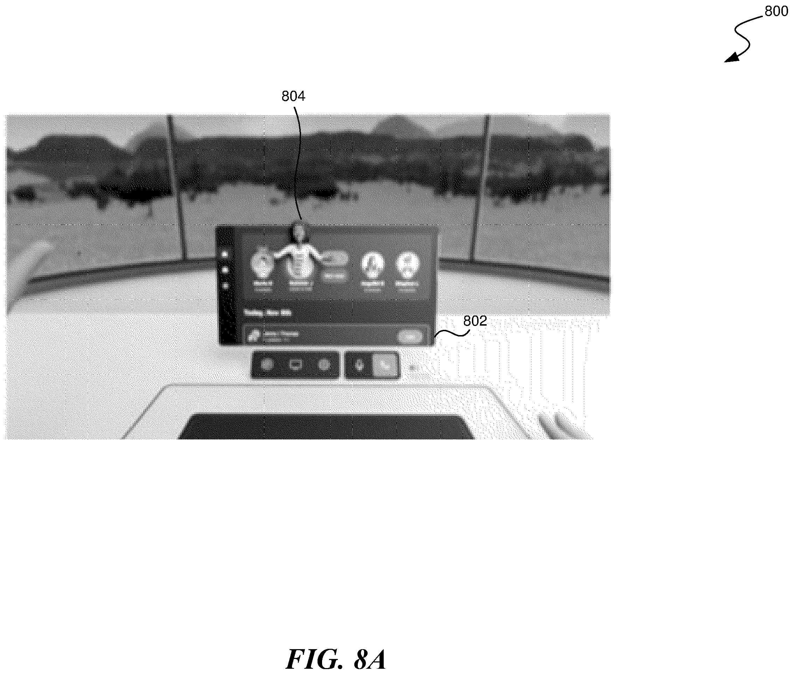

In some implementations, a participating user system can be a XR system, and the lightweight call data can be displayed to a participating user in a XR environment. Figure 8A is a diagram of an example lightweight call panel with avatar animation in artificial reality. Environment 800, an XR environment, includes panel 802 and avatar 804. Panel 802 can display lightweight call data and include lightweight call controls that are similar to panel 702 of Figure 7. In some implementations, the animated avatars corresponding to users participating on the lightweight call be displayed in three-dimensions. For example, avatar 804 is displayed as an animated avatar with depth (e.g., popping out of panel 802) during a lightweight call.

In some implementations, prior to the start of the lightweight call, avatar 804 can be displayed as a two-dimensional avatar. Once the lightweight call begins, avatar 804 can be transitioned into a three-dimensional avatar. For example, a user of the XR system can select avatar 804 from panel 802 and request a lightweight call with a target user corresponding to avatar 804. In response to the target user's acceptance of the request, avatar 804 can be animated to mimic the targe user's facial expressions/body poses, and avatar 804 can be transitioned in a three-dimensional avatar.

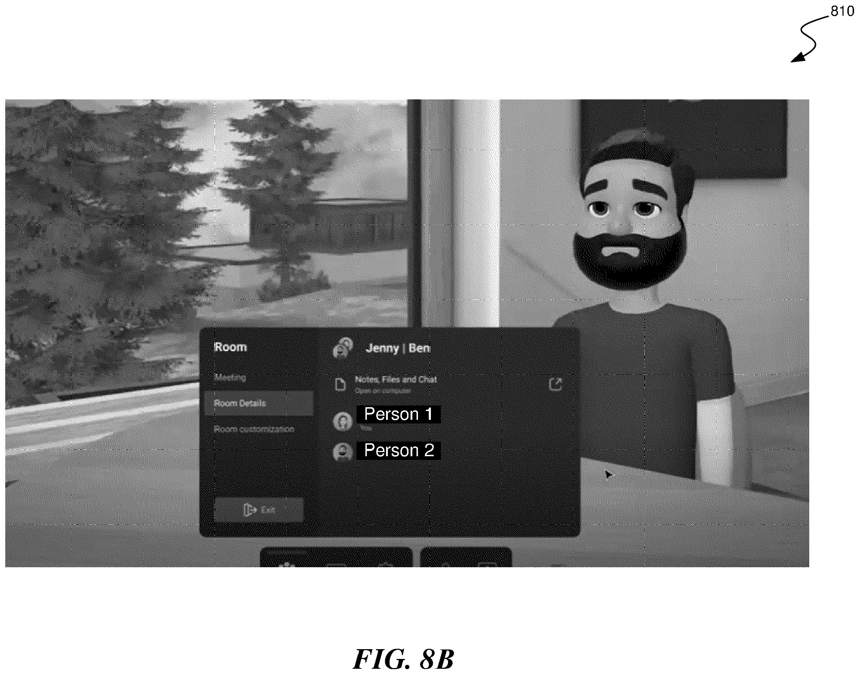

In some implementations, lightweight call controls provided via panel 802 can be used to transition the lightweight call to a XR virtual meeting. Figure 8B is a diagram of an example full format user interaction in artificial reality. Environment 810 is a virtual meeting between two users in a XR environment. In some implementations, the virtual meeting in XR can include collaboration tools absent from a lightweight call. For example, a shared XR whiteboard can support input from any users participating in the XR virtual meeting. In another example, the XR virtual meeting can permit screen sharing, where a participating user can share the user's screen with the other participants of the XR virtual meeting. Additional participants (beyond the original two participants of the lightweight call) can also join the XR virtual meeting.

Those skilled in the art will appreciate that the components illustrated in Figures 1-7, 8A, and 8B described above, and in each of the flow diagrams discussed below, may be altered in a variety of ways. For example, the order of the logic may be rearranged, substeps may be performed in parallel, illustrated logic may be omitted, other logic may be included, etc. In some implementations, one or more of the components described above can execute one or more of the processes described below.

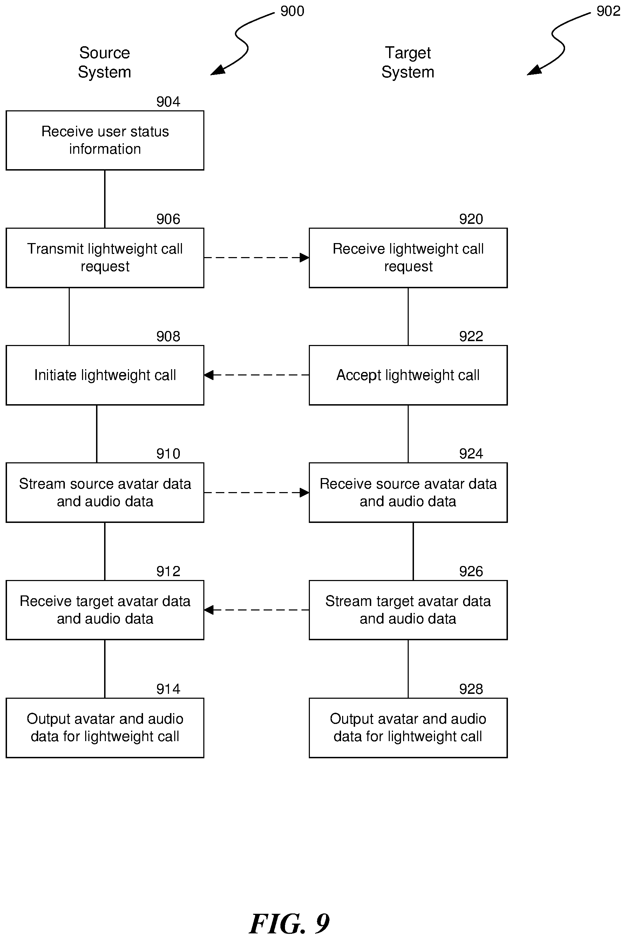

Figure 9 is a flow diagram illustrating a process used in some implementations of the present technology for lightweight calling among users with avatar animation. In some implementations, process 900 can be performed at a source system and process 902 can be performed at a target system. For example, process 900 can be triggered while a user interacts with a collaboration tool and process 902 can be triggered by a lightweight call request.

At block 904, process 900 can receive user status information. For example, a user of a source system can be part of a community of users that interact via a collaboration tool (e.g., collaboration application with a set of known users). The source system can receive status information for users. The status information can represent the users' availability to interact via the collaboration tool. Example statuses include focused, in a call, in a meeting, messaging (e.g., typing a message), do not disturb, away, available, and the like.

In some implementations, when a given user is participating in a type of interaction via the collaboration tool, the given user's status can reflect this state. For example, when the given user is in a virtual meeting (e.g., meeting in an artificial reality environment, meeting via a two-dimensional environment, etc.), the given user's status can be "in a meeting". Similarly, when the given user is in a video call, the given user's status can be "in a call". In some implementations, the given user can manually select a status, and/or a status can be automatically update based on a criteria (e.g., changed from "available" to "away" when no input is detected from the user for a threshold period of time, changed from "away" to "available" when input is detected from the user, etc.).

At block 906, process 900 can transmit a lightweight call request to a target system. For example, the user of the source system can provide input that triggers a lightweight call request to the target user/target user system. In some implementations, the source user can trigger a lightweight call request to the target user when the target user's status permits the request. Example user statuses the permit a lightweight call request include available, focused, messaging, and the like.

At block 908, process 900 can initiate the lightweight call. For example, in response to the target user's acceptance of the lightweight call request, the lightweight call can be initiated. For example, software structures (e.g., a real-time communication channel, data structures, software processes, etc.) for the lightweight call can be created, configured, and/or initialized.

At block 910, process 900 can stream source avatar animation data and source audio data to the target system. For example, the source system can render video of an animated avatar that corresponds to the source user and stream the rendered video to the target system as the source avatar animation data. In another example, the source system can render avatar pose information that defines avatar facial expression(s) and/or body pose(s) that mimic the source user, and the streamed source avatar animation data can comprise the avatar pose information. In addition, the source system can capture audio data from the source user (e.g., via one or more microphones) and stream the audio data to the target system. In some implementations, the source avatar animation data and source audio data can be streamed via a real-time communication channel initialized for the lightweight call that connects the source system and the target system.

At block 912, process 900 can receive target avatar animation data and target audio data from the target system. For example, the target system can render video of an animated avatar that corresponds to the target user and stream the rendered video to the source system as the target avatar animation data. In another example, the target system can render avatar pose information that defines avatar facial expression(s) and/or body pose(s) that mimic the target user, and the received target avatar animation data can comprise the avatar pose information. In addition, the target system can capture audio data from the target user (e.g., via one or more microphones) and stream the audio data to the source system. In some implementations, the target avatar animation data and target audio data can be received via the real-time communication channel initialized for the lightweight call.

At block 914, process 900 can display animated avatar(s) and output audio data for the lightweight call. For example, at least one animated avatar can be displayed via output of the target avatar animation data. For example, the target avatar animation data can be rendered video of a target user avatar and the source system can display the rendered video. In another example, the target avatar animation data can be avatar pose information (that corresponds to facial expression(s) and/or body pose(s) of the target user), and the source system can display a target avatar and animate the target avatar using the avatar pose information. In some implementations, an animated avatar that corresponds to the target user and an animated avatar that corresponds to the source user can both be displayed during the lightweight call. The audio data can be output from the source system via one or more audio output devices (e.g., speakers, headphones, earphones, etc.).

In some implementations, the animation of the avatar that corresponds to the target user comprises avatar pose(s) and facial expression(s) that correspond to captured poses and/or facial expressions of the target user. For example, the target system can capture images/video of the target user (e.g., via one or more cameras) and the target system can render: a video feed comprising an avatar that mimics that target user's body poses and/or facial expressions; or avatar pose information that correspond to the target user's body poses and/or facial expressions. In some implementations, the rendered video can be streamed from the target system to the source system and displayed to the source user via the source system. In some implementations, the avatar pose information can be streamed from the target system to the source system and the source system and animate the target user's avatar using the avatar pose information. In some implementations, display of the animated avatar that represents the target user and capture of the target user's facial expressions and/or poses can occur in real-time.

In some implementations, the source system can display a call panel that comprises the animated avatar that represents the target user and an animated avatar that represents the source user. For example, the animated avatar that represents the source user can be displayed using the source avatar animation data. In some implementations, the animated avatar that represents the target user and the animated avatar that represents the source user are displayed side-by-side in the call panel.

In some implementations, the source system comprises an artificial reality system and the call panel is displayed in a three-dimensional artificial reality environment. In this example, at least one of the animated avatar that represents the target user and the animated avatar that represents the source user is displayed in three-dimensions.

At block 920, process 902 can receive the lightweight call request from the source system. For example, the target system can receive a lightweight call request from the source system. In some implementations, the lightweight call request can comprise an expiration timer (e.g., 10 second, 20 second, 30 second, 1 minute, etc.) after which the request can no longer be accepted.

In some implementations, the target user can comprise a status that permits the lightweight call request. The target user can be notified of the request with different notifications based the user's status. For example, when the target user is "available", the notification can comprise a visual notification (e.g., pop up window or panel that identifies the source user, highlighted user element, such as a row for the source user, among a set of user elements, etc.) and an audio notification (e.g., a phone ring). When the target user is "focused", the notification can comprise one of a visual or an audio notification. In some implementations, the notification can include the source user's avatar and an animation, such as the avatar waiving at the user.

At block 922, process 902 can accept the lightweight call request. For example, the target user can provide user input that accepts the request (e.g., click accept on a notification that notifies the target user of the request). The request acceptance can be transmitted to the source system. In response to the acceptance, a communication channel for the lightweight call (e.g., real-time communication channel) can be configured.

At block 924, process 902 can receive source avatar animation data and source audio data from the source system. For example, the source system can render video of an animated avatar that corresponds to the source user and stream the rendered video to the target system as the source avatar animation data. In another example, the source system can render avatar pose information that defines avatar facial expression(s) and/or body pose(s) that mimic the source user, and the received source avatar animation data can comprise the avatar pose information. In addition, the source system can capture audio data from the source user (e.g., via one or more microphones) and stream the audio data to the target system. In some implementations, the source avatar animation data and source audio data can be received via a real-time communication channel initialized for the lightweight call that connects the source system and the target system.

At block 926, process 902 can stream target avatar animation data and target audio data to the source system. For example, the target system can render video of an animated avatar that corresponds to the target user and stream the rendered video to the source system as the target avatar animation data. In another example, the target system can render avatar pose information that defines avatar facial expression(s) and/or body pose(s) that mimic the target user, and the streamed target avatar animation data can comprise the avatar pose information. In addition, the target system can capture audio data from the target user (e.g., via one or more microphones) and stream the audio data to the source system. In some implementations, the target avatar animation data and target audio data can be streamed via the real-time communication channel initialized for the lightweight call

At block 928, process 900 can display animated avatar(s) and output audio data for the lightweight call. For example, at least one animated avatar can be displayed via output of the source avatar animation data. For example, the source avatar animation data can be rendered video of a source user avatar and the source system can display the rendered video. In another example, the source avatar animation data can be avatar pose information (that corresponds to facial expression(s) and/or body pose(s) of the source user), and the target system can display a source avatar and animate the source avatar using the avatar pose information. In some implementations, an animated avatar that corresponds to the target user and an animated avatar that corresponds to the source user can both be displayed during the lightweight call. The audio data can be output from the target system via one or more audio output devices (e.g., speakers, headphones, earphones, etc.). The target system can output lightweight call data in a manner similar to the source system, as described with reference to block 914.

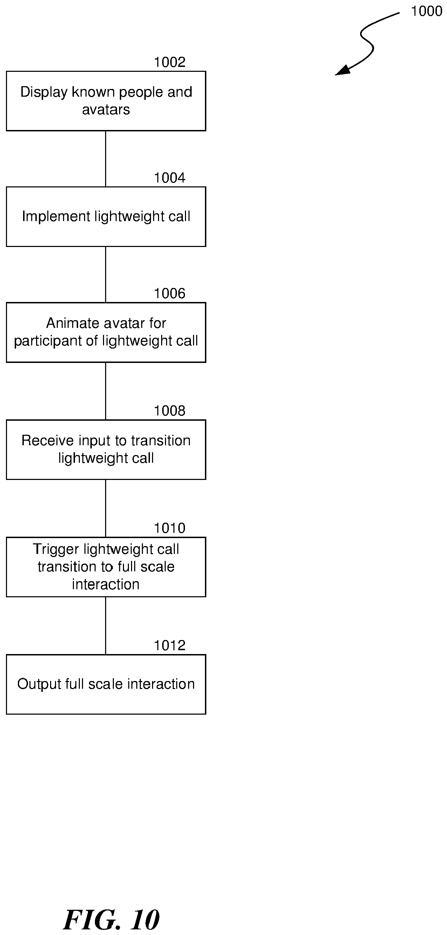

Figure 10 is a flow diagram illustrating a process used in some implementations of the present technology for transitioning a lightweight call to a full scale interaction. In some implementations, process 1000 can be triggered by a user interaction with a collaboration tool. For example, the user can, via interaction with the collaboration tool, participate in a lightweight call, such as a lightweight call created via process 900 of Figure 9. Process 1000 can be performed at a source system, target system, server, or any other suitable computing device.

At block 1002, process 1000 can display known people to a source user via a collaboration tool. For example, a source user of a source system can comprise known people, such as team members, connections relative to a social application, coworkers, and the like. The collaboration tool can support interactions between the source user and the known people. In some implementations, a display for each known person can include: an identifier of the known person (e.g., name, username, etc.), a status of the known person (e.g., available, in a meeting, on a call, do not disturb, etc.), and an avatar that corresponds to the known person. In some implementations, while no interaction between the source user and a given known person occurs, the given known person's avatar can be unanimated.

At block 1004, process 1000 can implement a lightweight call via transmitting or receiving a lightweight call request. For example, the source user can initiate a lightweight call request via the collaboration tool by selecting a known person. The selection can trigger a lightweight call request to the known user's system. The lightweight call can be triggered when the known person accepts the request. In another example, the source user can receive a lightweight call request from a known person. In some implementations, an indicator can be displayed to the source user that the user can interact with to accept the lightweight call request. The avatar of the known person can also indicate the lightweight call request. For example, the avatar of the known person can be animated to indicate the request (e.g., by waiving or performing some other gesture) and/or the avatar can be enlarged.

At block 1006, process 1000 can animate the avatar the corresponds to the known person participant of the lightweight call. For example, the source system can receive lightweight call data from the known person's system that includes avatar animation data and audio data. Using the avatar animation data, the source system can animate the known person's avatar such that the animated avatar mimics the facial expressions and/or body poses of the known person (in real-time). In some implementations, the display of the known person's animated avatar comprises a video.. Audio data for the lightweight call can be output from the source system via one or more audio output devices.

At block 1008, process 1000 can receive input to transition the lightweight call. For example, input from the source user via the source system and/or input from the known person via the known person's system can request a transition of the lightweight call to a full scale interaction, such as a full video call or a virtual meeting.

At block 1010, process 1000 can trigger the transition of the lightweight call to the full scale interaction. For example, in response to receiving user input for transitioning to the full scale interaction, a software call (e.g., application programming interface call, other suitable software call or message) to a collaboration tool can be issued. The software call can cause the collaboration tool to create the full scale interaction and add the participants of the lightweight call to the full scale interaction. For example, the software call can cause the creation of a video call, virtual meeting, or any other suitable full scale interaction.

At block 1012, process 1000 can output the full scale interaction. For example, the collaboration tool can display a video call that comprises full video of both participants from the lightweight call. In another example, the collaboration tool can display a virtual meeting that includes collaboration tools absent from the lightweight call (e.g., virtual whiteboard, screen sharing, etc.).

Reference in this specification to "implementations" (e.g., "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle-specified number of items, or that an item under comparison has a value within a middle-specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific examples and implementations have been described herein for purposes of illustration, but various modifications can be made without deviating from the scope of the examples and implementations. The specific features and acts described above are disclosed as example forms of implementing the claims that follow. Accordingly, the examples and implementations are not limited except as by the appended claims.

Any patents, patent applications, and other references noted above are incorporated herein by reference. Aspects can be modified, if necessary, to employ the systems, functions, and concepts of the various references described above to provide yet further implementations. If statements or subject matter in a document incorporated by reference conflicts with statements or subject matter of this application, then this application shall control.

## Claims

1. A method for lightweight calling among users with avatar animation, the method comprising:
receiving, at a source system, status information representative of statuses for a plurality of user systems, wherein at least one of the plurality of user systems comprises a status that corresponds to availability for a lightweight call;
transmitting a lightweight call request to the one user system;
creating the lightweight call in response to acceptance of the lightweight call request;
streaming, during the created lightweight call, source audio data and source avatar animation data to the one user system, wherein the source avatar animation data is generated using captured visual data of a source user operating the source system;
receiving, during the created lightweight call from the one user system, target audio data and target avatar animation data, wherein the target avatar animation data is generated by the one user system using captured visual data of a target user operating the one user system; and
outputting the target audio data and displaying, using the target avatar animation data, an animated avatar that represents the target user, wherein the animated avatar performs facial expressions in correspondence with the output target audio data.

2. The method of claim 1, further comprising:
displaying a call panel at the source system, the call panel comprising the animated avatar that represents the target user and an animated avatar that represents the source user, wherein the animated avatar that represents the source user is displayed using the source avatar animation data;
preferably wherein the animated avatar that represents the target user and the animated avatar that represents the source user are displayed side-by-side in the call panel.

3. The method of claim 2, wherein the source system comprises an artificial reality system and the call panel is displayed in a three-dimensional artificial reality environment;
preferably wherein at least one of the animated avatar that represents the target user and the animated avatar that represents the source user is displayed in three-dimensions.

4. The method of any preceding claim, further comprising:
generating, at the source system, the source avatar animation data using the captured visual data of the source user, the source avatar animation data comprising a video stream of an animated avatar that represents the source user.

5. The method of any preceding claim, wherein the received target avatar animation data comprises avatar pose data for the avatar that represents the target user, the avatar pose data corresponds to body poses and facial expressions of the target user generated using the captured visual data of the target user, and the avatar pose data is used to animate the avatar that represents the target user.

6. The method of any preceding claim, wherein the received target avatar animation data comprises a video stream of the animated avatar that represents the target user, and the displayed animated avatar that represents the target user comprises the received video stream.

7. The method of any preceding claim, further comprising:
transitioning, in response to input from the source user, the lightweight call into a full video call or a virtual meeting that comprises the source user and the target user;
preferably wherein,
the lightweight call is transitioned into the full video call, and the full video call comprises real-time video of the source user and the target user, or
the lightweight call is transitioned into the virtual meeting, and the virtual meeting comprises one or more collaboration tools absent from the lightweight call.

8. The method of claim 7, wherein,
prior to creating the lightweight call, the avatar that represents the target user is displayed at the source system and is unanimated,
after creating the lightweight call, the avatar that represents the target user is displayed at the source system and is animated, and
after the lightweight call is transitioned to the full video call, real-time video of the target user is displayed at the source system and the avatar that represents the target user A) is no longer displayed at the source system or B) is displayed at the source system and is unanimated;
preferably wherein the one or more collaboration tools comprise a shared virtual whiteboard, screen sharing, or any combination thereof.

9. A computer-readable storage medium storing instructions that, when executed by a computing system, cause the computing system to perform a process for lightweight calling among users with avatar animation, the process comprising:
transmitting, from a source system, a lightweight call request to a target system;
creating the lightweight call in response to acceptance of the lightweight call request;
streaming, during the created lightweight call, source audio data and source avatar animation data to the target system, wherein the source avatar animation data is generated using captured visual data of a source user operating the source system;
receiving, during the created lightweight call from the target system, target audio data and target avatar animation data, wherein the target avatar animation data is generated by the target system using captured visual data of a target user operating the target system; and
outputting the target audio data and displaying, using the target avatar animation data, an animated avatar that represents the target user, wherein the animated avatar performs facial expressions in correspondence with the output target audio data.

10. The computer-readable storage medium of claim 9, wherein the process further comprises:
displaying a call panel at the source system, the call panel comprising the animated avatar that represents the target user and an animated avatar that represents the source user, wherein the animated avatar that represents the source user is displayed using the source avatar animation data.

11. The computer-readable storage medium of claim 10, wherein the animated avatar that represents the target user and the animated avatar that represents the source user are displayed side-by-side in the call panel.

12. The computer-readable storage medium of claim 10 or 11, wherein the source system comprises an artificial reality system and the call panel is displayed in a three-dimensional artificial reality environment;
preferably wherein at least one of the animated avatar that represents the target user and the animated avatar that represents the source user is displayed in three-dimensions.

13. The computer-readable storage medium of any of claims 9 to 12, wherein the process further comprises:
generating, at the source system, the source avatar animation data using the captured
visual data of the source user, the source avatar animation data comprising a video stream of an animated avatar that represents the source user.

14. The computer-readable storage medium of any of claims 9 to 13, wherein the received target avatar animation data comprises avatar pose data for the avatar that represents the target user, the avatar pose data corresponds to body poses and facial expressions of the target user generated using the captured visual data of the target user, and the avatar pose data is used to animate the avatar that represents the target user.

15. A source system for lightweight calling among users with avatar animation, the source system comprising:
one or more processors; and
one or more memories storing instructions that, when executed by the one or more processors, cause the source system to perform a process comprising:
transmitting, from the source system, a lightweight call request to a target system;
creating the lightweight call in response to acceptance of the lightweight call request;
streaming, during the created lightweight call, source audio data and source avatar animation data to the target system, wherein the source avatar animation data is generated using captured visual data of a source user operating the source system;
receiving, during the created lightweight call from the target system, target audio data and target avatar animation data, wherein the target avatar animation data is generated by the target system using captured visual data of a target user operating the target system; and
outputting the target audio data and displaying, using the target avatar animation data, an animated avatar that represents the target user, wherein the animated avatar performs facial expressions in correspondence with the output target audio data.
